# EUROPEAN PATENT APPLICATION

(11) **EP 1 592 210 A2**
(43) Date of publication of application: **02.11.2005**
(21) Application number: 05008655.2
(22) Date of filing: 20.04.2005
(51) Int. Cl.: H04M 1/725

(54) **LED indicating the roaming area for a mobile phone**

(30) Priority: 20.04.2004 KR 2004027025
(71) Applicant: LG ELECTRONICS INC., Seoul (KR)
(72) Inventor: Choi, Dong Shik, Goesan-gun Chungcheongbuk-do (KR)
(74) Representative: von Hellfeld, Axel

(57) **Abstract**

A roaming service area indicating device (100) for a mobile telecommunication device is disclosed. The device includes a mobile station modem outputting a roaming indication control signal (10) depending upon a present location of the mobile telecommunication device, a switching circuit performing switching operations in accordance with the roaming indication control signal outputted from the mobile station modem (20), and a light emitting part being activated in accordance with an operation result of the switching circuit (30).

## Description

### CROSS-REFERENCE TO RELATED APPLICATIONS

This application claims the benefit of Korean Application No. 10-2004-0027025, filed on April 20, 2004, which is hereby incorporated by reference as if fully set forth herein.

### BACKGROUND OF THE INVENTION

### Field of the Invention

The present invention relates to a mobile telecommunication device, and more particularly, to a roaming service area indicating device for a mobile telecommunication device. Although the present invention is suitable for a wide scope of applications, it is particularly suitable for reducing the amount of power consumed for indicating the roaming service area.

In order to receive a telecommunication service using a mobile telecommunication device, a user must be subscribed to at least one mobile telecommunication service provider. A wide range of mobile telecommunication service providers has cooperative agreements to provide each other's customers, who travel beyond the boundaries of their originally subscribed service area, with services provided by the local mobile telecommunication service providers of the corresponding area, at which the traveling user is located. Accordingly, a roaming service relates to providing the user with the desired communication service at a local area service rate, even when the user travels outside the scope of the service network of the service provider to which the user is subscribed.

### Discussion of the Related Art

In the related art mobile telecommunication device, a display in the mobile telecommunication device indicates whether or not the roaming service is being carried out. More specifically, the indication is shown in the liquid crystal display (LCD) of the communication device. In the LCD of the mobile telecommunication device, the user can verify whether he or she is presently in a roaming service area or in the subscribed service provider area (hereinafter referred to as "home service area"). In the related art mobile telecommunication device, the roaming service area is indicated only through the LCD of the device. Therefore, when the communication device is a folder type having only a single LCD part, the user is required to open the folder of the communication device in order to verify whether he or she is in a roaming service area. In case of a folder type mobile communication device having a dual LCD, power should be applied to the backlight of the LCD in order to allow the user to verify the service area.

### SUMMARY OF THE INVENTION

Accordingly, the present invention is directed to a roaming service area indicating device for a mobile telecommunication device that substantially obviates one or more problems due to limitations and disadvantages of the related art.

An object of the present invention is to provide a roaming service area indicating device for a mobile telecommunication device that can reduce the amount of power consumed for indicating the roaming service area.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a roaming service area indicating device in a mobile telecommunication device includes a mobile station modem outputting a roaming indication control signal depending upon a present location of the mobile telecommunication device, a switching circuit performing switching operations in accordance with the roaming indication control signal outputted from the mobile station modem, and a light emitting part being activated in accordance with an operation result of the switching circuit.

Herein, the light emitting part is formed of first and second light emitting diodes. And, each of the light emitting diodes emits a color different from one another.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:

FIG. 1 illustrates a block diagram showing a structure of the roaming service area indicating device for a mobile telecommunication device according to the present invention; and

FIG. 2 illustrates a schematic diagram showing the block diagram of FIG. 1 in more detail.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

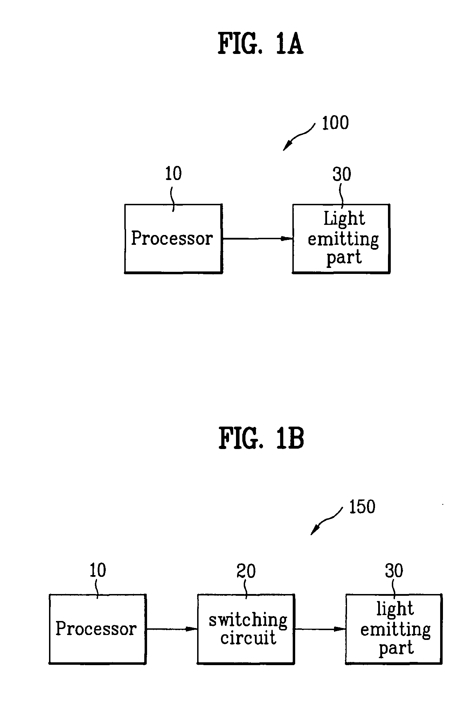

FIG. 1 illustrates a block diagram showing a structure of the roaming service area indicating device for a mobile telecommunication device according to the present invention.

Referring to FIG. 1, the roaming service area indicating device for the mobile telecommunication device according to the present invention includes a mobile station modem (MSM) 10 outputting a roaming indication control signal depending upon a present location of the mobile telecommunication device, a switching circuit 20 performing switching operations depending upon the roaming indication control signal outputted from the mobile station modem 10, and a light emitting part 30 operating in accordance with the operation results of the switching circuits 20.

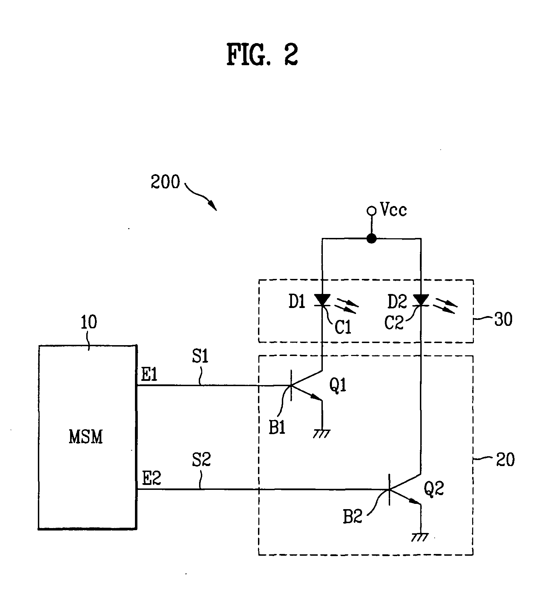

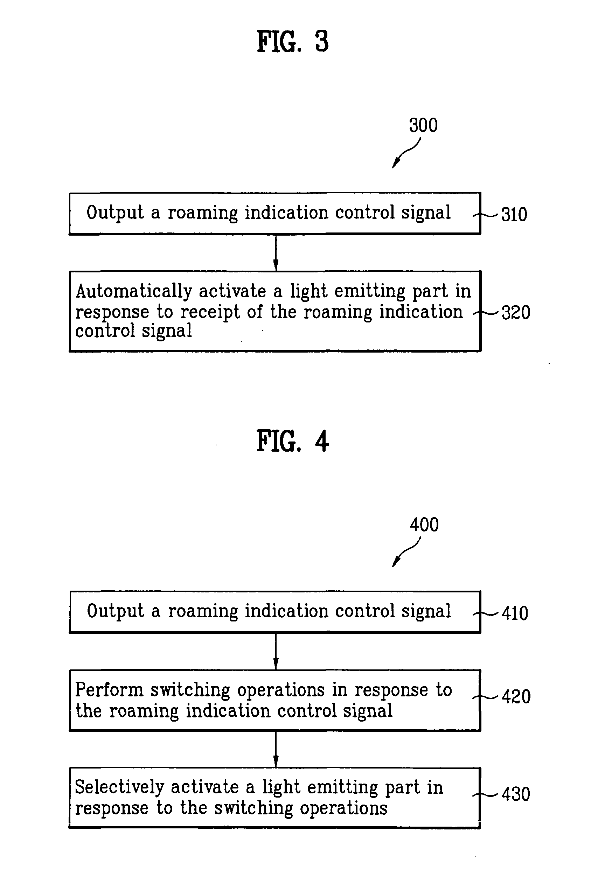

FIG. 2 illustrates a schematic diagram showing the block diagram of FIG. 1 in more detail.

Generally, the mobile station modem 10 has a plurality of output terminals. However, only two output terminals (E1 and E2) required for describing the operation of the present invention are illustrated in the example shown in FIG. 2 for simplicity. The switching circuit 20 is formed of first and second switching transistors Q1 and Q2. The first and second output signals E1 and E2 of the modem 10 are transmitted to a base terminal of each of the first and second switching transistors Q1 and Q2, which form the switching circuit 20. A collector terminal for each of the first and second switching transistors Q1 and Q2 is connected to the light emitting part 30. Herein, the light emitting part 30 is formed of first and second light emitting diodes D1 and D2. The collector terminal of the first switching transistor Q1 is connected to the first light emitting diode D1. And, the collector terminal of the second switching transistor Q2 is connected to the second light emitting diode D2.

By using a general purpose input output (GPIO) pin of the mobile station modem 10, first and second light emitting diode enable control signals LED Enable 1 and LED Enable 2 are outputted. When power is applied to the mobile telecommunication device, the device selects an accessible system and channel from where the device is located. At this point, the mobile telecommunication device compares the selected system and channel with its preferred roaming list (PRL). When the selected system and channel correspond to a home system, the first light emitting diode enable control signal E1 is outputted at a high state, and the second light emitting diode enable control signal E2 is outputted at a low state. The first light emitting diode enable control signal E1 is transmitted to the base terminal of the first switching terminal Q1. Accordingly, the power is supplied to the first light emitting diode D1. Subsequently, depending upon whether the power is supplied or not, the first light emitting diode D1 is turned either on or off.

Conversely, when the selected system and channel correspond to a roaming system, the second light emitting diode enable control signal E2 is outputted at a high state, and the first light emitting diode enable control signal E1 is outputted at a low state. The second light emitting diode enable control signal E2 is transmitted to the base terminal of the second switching transistor Q2. Accordingly, the power is supplied to the second light emitting diode D2. Subsequently, depending upon whether the power is supplied or not, the second light emitting diode D2 is turned either on or off.

Therefore, depending upon which light emitting diode of the indicator is activated, the user of the mobile telecommunication device can be aware of whether he or she is presently located at a home service area or a roaming service area. More specifically, the first light emitting diode D1 may blink when the user is determined to be in the home service area, whereas the second light emitting diode D2 may blink when the user is determined to be in the roaming service area. Alternatively, the first light emitting diode D1 may blink when the user is determined to be in the roaming service area, and the second light emitting diode D2 may blink when the user is determined to be in the home service area. Preferably, "home" and "roaming" should be indicated on a set portion near each light emitting diode formed in the indicator, respectively.

The light emitting diode can be activated, when in the home service area or the roaming service area, in a wide range of forms. For example, each of the areas can be indicated in different colors. Alternatively, the light emitting diode can remain inactivated in the home service area, whereas either the first light emitting diode or the second light emitting diode is activated in the roaming service area.

As described above, the roaming service area indicating device for the mobile telecommunication device indicates the type of service area through the indicator. Thus, the user can verify whether or not he or she is in a roaming service area. Accordingly, the backlight of the liquid crystal display is not required to be turned on, thereby extending the usage time of the battery of the mobile telecommunication device. Although the roaming service area indicating device for the mobile telecommunication device according to the present invention does not provide particular efficiency when used in the originally subscribed service area *(i.e.,* the home service area), the present invention can provide considerable efficiency when used in an area outside the home service area *(i.e.,* the roaming service area) requiring a different service charge rate.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A roaming service area indicating device in a mobile telecommunication device, comprising:
a mobile station modem outputting a roaming indication control signal depending upon a present location of the mobile telecommunication device;
a switching circuit performing switching operations in accordance with the roaming indication control signal outputted from the mobile station modem; and
a light emitting part being activated in accordance with an operation result of the switching circuit.

2. The device according to claim 1, wherein the switching circuit is formed of first and second switching transistors being switched in accordance with the control signal of the mobile station modem.

3. The device according to claim 2, wherein each of the switching transistors is respectively supplied with the control signal of the mobile station modem through each base terminal, thereby carrying out switching operations.

4. The device according to claim 1, wherein the light emitting part is formed of first and second light emitting diodes.

5. The device according to claim 4, wherein each of the light emitting diodes emits a color different from one another.
